# EUROPEAN PATENT SPECIFICATION

(11) **EP 0 626 093 B1**
(45) Date of publication and mention of the grant of the patent: **14.01.1998**
(21) Application number: 93903716.4
(22) Date of filing: 11.02.1993
(51) Int. Cl.: G11B 23/03, G11B 33/04

(54) **A CONTAINER**
BEHÄLTER
BOITIER

(30) Priority: 12.02.1992 AU 854/92
(43) Date of publication of application: 30.11.1994
(73) Proprietor: GLOGER, Klaus, Willy, Bayview Heights, Cairns, QLD 4868 (AU)
(72) Inventor: GLOGER, Klaus, Willy, Bayview Heights, Cairns, QLD 4868 (AU)
(74) Representative: Finsterwald, Martin
(86) International application number: AU9300053
(87) International publication number: WO9316471

(56) References cited:
- EP-A- 0 181 835
- EP-A- 0 355 011
- EP-A- 0 358 780
- EP-A- 0 568 729
- AU-A- 3 199 284
- AU-A- 3 244 784
- AU-A- 4 240 485
- AU-A- 4 601 785
- DE-A- 2 307 410
- DE-A- 3 008 513
- DE-U- 9 205 830
- FR-A- 2 644 439
- US-A- 3 969 007
- US-A- 4 664 454

## Description

The present invention relates to a container, and in particular to a hand held container for storing compact discs.

Containers currently being used to store compact discs can be difficult to open. Young children with small hands find it particularly difficult to apply the necessary force to open these types of containers. The present invention seeks to provide a container which can both safely store objects such as compact discs and which can easily be opened.

DE-A-30 08 513 discloses a container having the features of the precharacterising part of claim 1.

The present invention provides a hand held disc container as set forth in claim 1.

Preferred embodiments are set forth in the dependent claims 2 to 6.

An embodiment of the invention will now be described by way of example only with reference to the accompanying drawings in which:-
Figure 1 is a perspective view of a container according to a first embodiment of the invention showing a compact disc stored within the container;
Figure 2 is an assembly view of the container shown in Figure 1;
Figure 3 is a top view of the container shown in Figure 1 illustrating a compact disc being ejected from the container;
Figure 4 is an end view of the container shown in Figure 3.
Figure 5 is an assembly view of a container according to a second embodiment of the invention; and
Figure 6 is a top view of the container shown in Figure 5 illustrating a compact disc being ejected from the container.

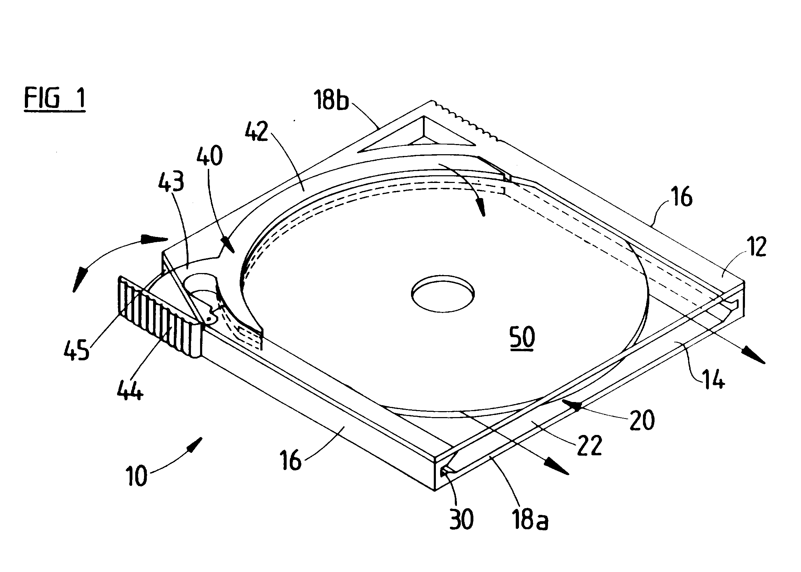

Figure 1 illustrates a square container 10 which is made of a clear plastics material. The container 10 has top and bottom walls 12, 14 and first and second pairs of opposed side walls 16, 18. The container 10 is formed with a recess 20 or cavity having a mouth 22 or slot which opens through side wall 18a. Recess 20 is arranged to receive an object such as a compact disc 50.

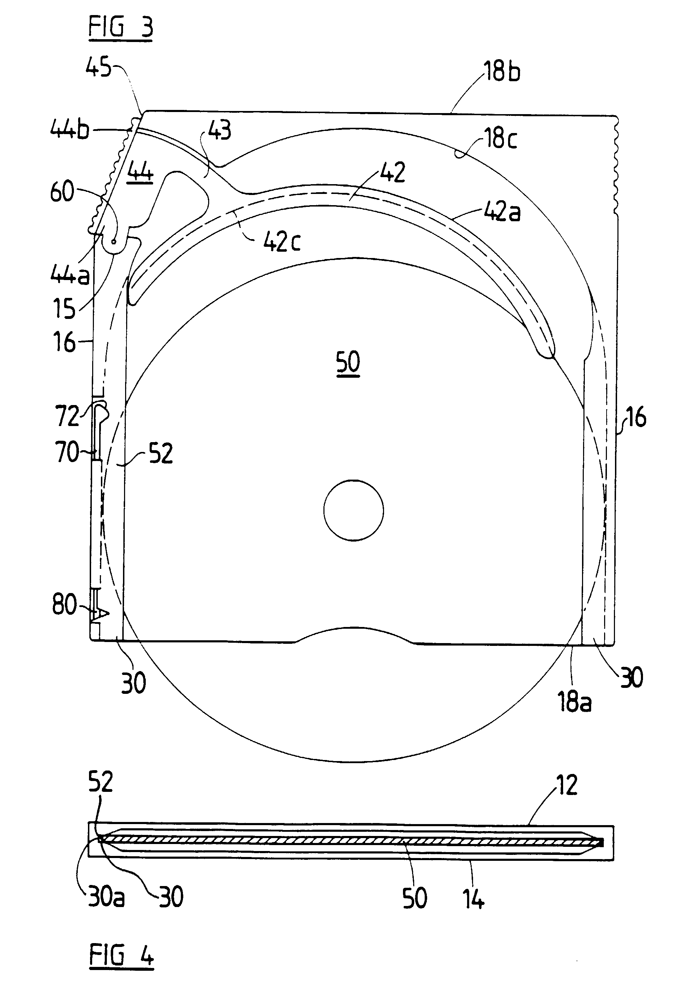

A track 30 extends along each of the side walls 16 of the container 10. The longitudinal mouth of each track 30 opens into the recess 20. Each track 30 is arranged to receive a portion of the peripheral edge 52 of the compact disc 50 when it is received in the container 10. In this way, the area of the side faces of the compact disc 50 which must be preserved in order to ensure sound quality is prevented from coming into contact with either of the top and bottom walls 12, 14 of the container 10. The engagement of the peripheral edge 52 of the compact disc 50 in the tracks 30 is best illustrated in Figure 4.

An ejector 40 comprising an arm member 42, a web 43 and a trigger 44 is mounted in the container 10. Web 43 joins the arm member 42 to the trigger 44. Arm member 42 comprises a substantially C-shaped rib which is shaped along one face 42a to be complementary with the inside wall surface 18c of the side wall 18b, and on the other opposite face 42b includes a track or groove 42c which is shaped so as to be complementary with the periphery of the compact disc 50. The ejector 40 is fitted to the container 10 such that the trigger 44 extends through an aperture 45 in one of the side walls 16 of the container 10. Aperture 45 extends diagonally across one of the corners of the container 10. Trigger 44 is preferably sized and shaped so that it is substantially contained within an area bounded by imaginary extensions of the side walls 16, 18. The ejector 40 is preferably made of a moulded plastics material.

The ejector 40 is pivotally mounted to the container 10 by the interconnection between the innermost end 44a of the trigger 44 and a complementary shaped portion 15 of the side wall 16 (Figure 4). This interconnection enables the ejector 40 to be movable between first position, in which the arm member 42 is positioned substantially adjacent to the inside wall surface 18c of side wall 18b, and a second position in which the arm member 42 is displaced from said inside wall surface 18c of the side wall 18b of the container 10. The second position of the arm member 42 is illustrated in Figure 3. Ejector 40 pivots about pivot point 60 as it moves from the first position to the second position.

Movement of the arm member 42 from the first position to the second position is facilitated by pushing the outermost end 44b of the trigger 44 towards the side wall 16 of the container 10. Such movement of the trigger 44 causes the arm member 42 to move from the first position, as illustrated in Figure 1, to the second position, as illustrated in Figure 3. As the arm member 42 moves from the first position to the second position the compact disc 50 is pushed along the tracks 30 in each of the side walls 16 of the container 10. When the arm member 42 is in the second position, as illustrated in Figure 3, the compact disc 50 is positioned so that a substantial portion of the compact disc 50 extends through the mouth 22 of the recess 20 of the container 10.

A flexible resilient tongue 70 is formed in one of the side walls 16 of the container 10. The free end 72 of the tongue 70 is arranged to protrude through the bottom wall 30a of the track 30. Thus, when the compact disc 50 is held in the container 10 and the arm member 42 is in the first position, the free end 72 of the tongue 70 engages against the periphery of the compact disc 50. This engagement between the free end 72 of the tongue 70 and the disc 50 is sufficient to prevent the disc 50 from inadvertently falling out of the container 10.

When the arm member 42 is moved, by actuation of the trigger 42, from the first position to the second position, the periphery of the compact disc 50 is forced against the free end 72 of the tongue 70. The tongue 70 is thereby caused to deflect outwardly away from the bottom wall 30a of the track 30 so as to enable the disc 50 to pass by it and travel along the track 30 towards the mouth 22 of the container 10.

A second flexible resilient tongue 80 is formed in one of the side walls 16 substantially adjacent side wall 18a. Second tongue 80 is smaller than tongue 70 but is preferably of similar construction. The second tongue 80 is arranged to prevent the compact disc 50 from exiting the container too quickly when the trigger 44 is activated with great force.

To prevent dirt and dust from entering the recess 30 of the container 10 the mouth 22 of the recess 20 may be fitted with a set of fine soft bristles or a strip of felt type material to prevent entry of dust etc. into the recess 20. Alternatively, a flap may be hingedly mounted across the mouth 22 of the recess 20 to prevent entrance of dust etc. The flap would be arranged to open upon contact of the compact disc 50 on the inside face of the flap when the arm member 42 is moved from the first to the second position.

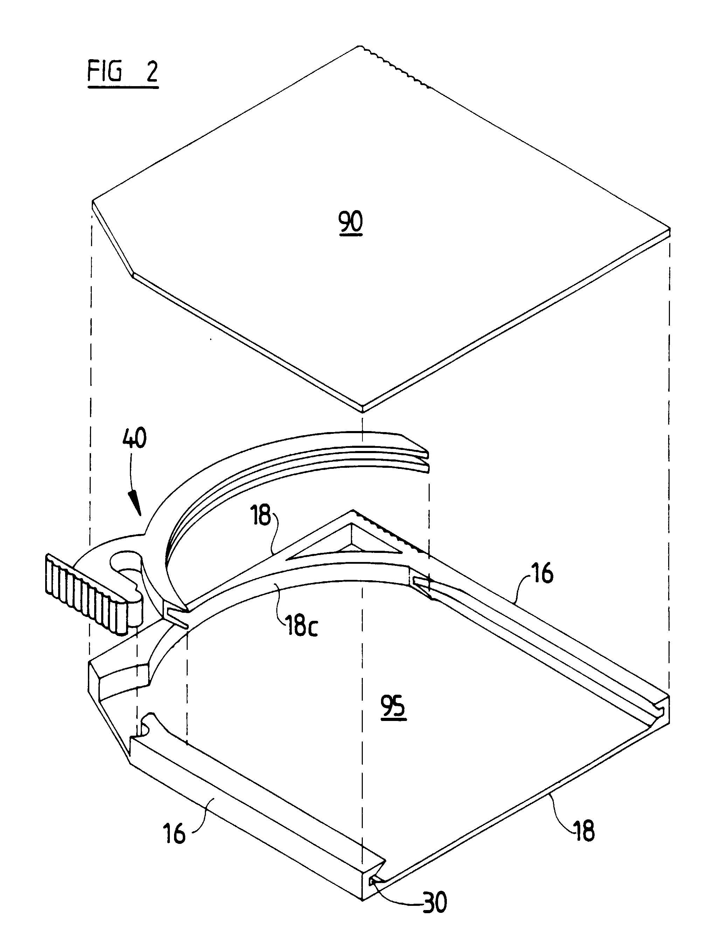

The container 10 would preferably comprise two moulded parts. The lower part 95 comprising side walls 16, 18, bottom wall 14 and tongues 70, 80 and the upper part 90 comprising the top wall 12. As shown in Figure 2, the container 10 and ejector 40 may be assembled by fitting the ejector 40 into the lower part 95 so that the innermost end 44a of the trigger 44 is engaged with the complementary shaped portion 15 of the side wall 16, and then attaching the upper part 90 to the lower part 100. The upper part 90 may be attached to the lower part 95 by gluing, ultrasonic welding etc.

The embodiment described is particularly advantageous because the compact disc 50 can be quickly and easily removed from the container. The compact disc 50 is replaced into the container by inserting the compact disc 50 such that the peripheral edge 52 of the disc 50 is engaged in the tracks 30. A gentle force is then applied to the compact disc 50 to push the disc 50 inwardly along the tracks 30 and past the first and second tongues 70, 80. The first and second tongues 70, 80 are arranged so that they deflect outwardly away from the track 30 when the edge of the compact disc 50 is forced against them. As the disc 50 is pushed into the container 10 along tracks 30 the disc 50 contacts the arm member 42 to move it from the second position to the first position. The container 10 is easily manufactured and assembled.

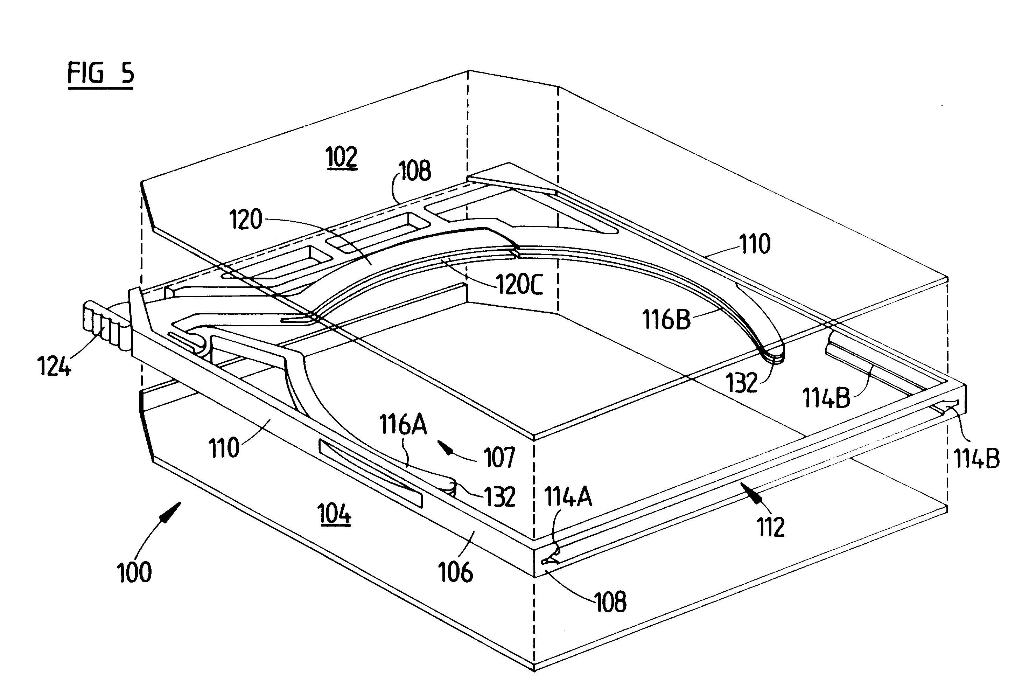

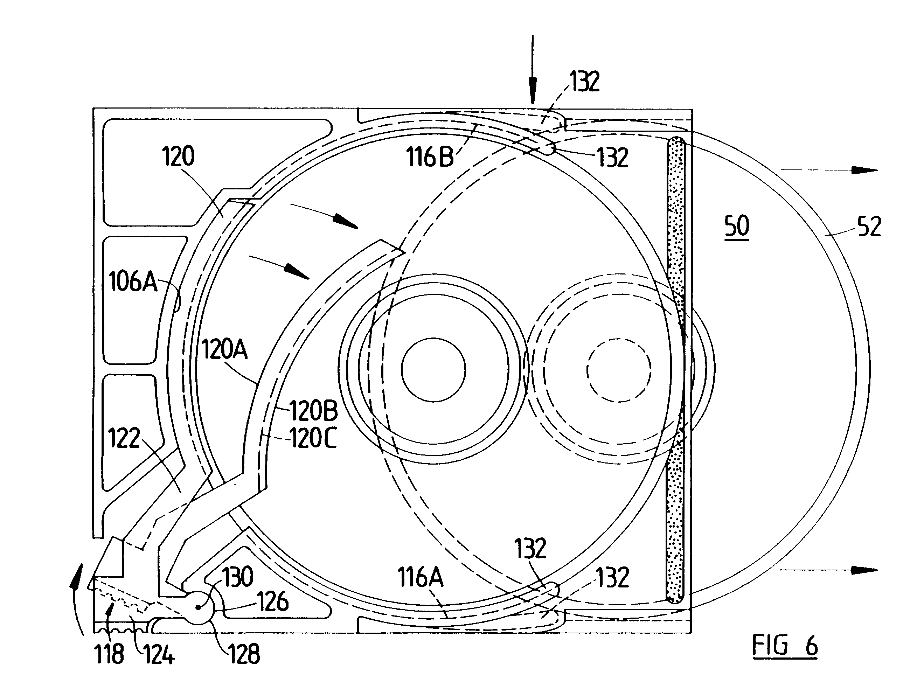

Figures 5 and 6 depict a container 100 in accordance with a second embodiment of the invention. The container 100 is similar to the container shown in Figures 1 to 4 but, as best shown in Figure 5, comprises a three piece construction rather than a two piece construction.

The container 100 shown in Figures 5 and 6 comprises a top cover 102, a bottom cover 104 and a core frame 106 disposed therebetween. A space 107 for receiving a compact disc is defined by the top and bottom covers 102, 104 and the core frame 106. The top and bottom covers 102, 104 are each made from a rectangular sheet of a plastics material which are bonded to the intermediate core frame 106. The core frame 106 has first and second pairs of opposed side walls 108, 110. In one of the side walls 108 there is an opening or slot 112 arranged to enable a compact disc 50 to pass therethrough so that it can be contained in the space 107. A track section 114A, 114B extends from the opening or slot 112 and along a portion of each of the side walls 110 of the container 100.

As best shown in Figure 6, the core frame 106 includes two curved track sections 116A, 116B formed substantially adjacent the side walls 110. The straight track sections 114A, 114B and the curved track sections 116A, 116B are all arranged so as to receive a portion of peripheral edge 52 of the compact disc 50 when it is received in the container 100.

An ejector 118 comprising an arm member 120, a web member 122 and a trigger member 124 is pivotally mounted in the container 100. The ejector 118 may be fitted to the container 100 either during assembly of the top and bottom covers 102, 104 and the core frame 106 or once the container 100 has been completely assembled. The ejector 118 is preferably made of polypropylene and is thinner than the thickness of the core frame 106. This ensures that the ejector 118 can move back and forth as shown by dotted lines in Figure 6 without the ejector 118 coming into contact with either the top or bottom covers 102, 104. The arm member 120 of the ejector comprises a substantially, C-shaped rib which is shaped along one face 120A so as to be complementary with the inside surface 106A of the core frame 106. Along the other face 120B the arm member 120 has a track or groove 120C which is shaped to receive the periphery 52 of a compact disc 50.

The ejector 118 is substantially similar to the ejector 40 described in relation to the first embodiment of the invention. The only substantial difference is the manner of interconnection of the ejector 118 to the core frame 106. The ejector 118 is pivotally connected to the core frame 106 by means of a circular member 126 which is received in a socket 128 in the core frame 106. The interconnection of the ejector 118 to the container 100 is such that the ejector 118 pivots about pivot point 130 when the trigger 124 is pushed inwardly.

A compact disc 50 is inserted into the container 100 by passing the disc 50 through the opening or slot 112 in the side wall 108. As best shown in Figure 6, as the compact disc 50 is inserted the peripheral edges 52 of the disc 50 enter the straight track sections 114A, 114B on the side walls 106. As the compact disc is pushed further into the container 100, portions of the peripheral edge 52 of the disc 50 engage with each of the first ends 132 of the curved track sections 116A, 116B. The curved track sections 116A, 116B are constructed in such a manner that the first ends 132 can flex outwardly towards their adjacent side walls 106. This movement of the first ends 132 of the curved track sections 116A, 116B is depicted by the dotted outline in Figure 6. The first ends 132 of the curved track sections 116A, 116B are preferably arranged such that they cause the disc 50 to be pulled or drawn into the container 100 until a portion of the peripheral edge 52 of the disc 50 enters the track 120C in the arm member 120. At this point the first ends 132 of the curved track sections 116A, 116B flex inwardly to their original positions.

To eject the compact disc 50 from the container 100, the trigger 124 of the ejector 118 is pushed inwardly which causes the arm member 120 to push the compact disc 50 out of the container. The pressure applied to the disc 50 by the arm member 120 is sufficient to cause the first ends 132 of the curved track sections 116A, 116B to move outwardly towards the side walls 106. This movement preferably causes the peripheral edge 52 of the disc 50 to move along the straight track sections 114A, 114B and out of the container 100.

The straight track sections 114A, 114B, the curved track sections 116A, 116B and the track 120C in the arm member 120 are arranged such that when a compact disc 50 moves in or out of the container 100 and when the disc 50 is stored in the container the screen printed faces of the disc do not come into contact with the top or bottom covers 102, 104.

The free end portions 132 of the curved track sections 116A, 116B ensure that a compact disc 50 contained within the container 100 is not inadvertently released from the container. The free end portions 132 act in a similar manner to the tongue 70 described in relation to the first embodiment of the invention.

Positioned across the width of the inner side of the top and bottom covers 102, 104 and adjacent the opening 112 is a thin strip of soft material which is arranged to clean the top and bottom faces of the disc 50 as it is inserted into and out of the container 100. The opening 112 may be provided with a flap or bristles to prevent dust or dirt from entering the space 107.

The embodiments have been described by way of example only and modifications are possible within the scope of the appended claims.

## Claims

1. A hand held disc container comprising a flat generally rectangular box defining a disc-containing cavity (20; 107) adapted snugly to receive opposed edge portions of the disc, a slot (22; 112) in one edge of the box communicating with the cavity (20; 107) and through which the disc can be inserted and removed from the box in edgewise fashion, and manually operable disc ejector means (40; 118) mounted to engage an edge portion of the disc to displace the disc at least partially from the cavity (20; 107), the disc ejector means (40; 118) comprising an arm (42; 120) extending into the rear of the cavity (20; 107) for engaging the disc and a portion (44; 124) extending externally of the box and adapted for manual actuation by an operator, characterised in that the arm (42; 120) has a curvature corresponding to the curvature of the disc and a groove (42C; 120C) extending along the arm (42; 120) and facing towards the slot (22; 112), the groove (42C; 120C) receiving and supporting the peripheral edge portion of the disc at the rear of the disc to prevent axial displacement thereof, and opposed tracks (30; 114A, 114B, 116A, 116B) are formed within the box along opposite sides of the cavity (20; 107) to prevent axial displacement of the disc within the cavity, said groove (42C; 120C) and tracks (30; 114A, 114B, 116A, 116B) preventing contact between the faces of the disc and the opposed walls of the cavity (20; 107).

2. A container according to claim 1, characterised in that the arm (42; 120) and manually actuable portion (44; 124) of the ejector means are integrally formed, the ejector means is mounted for pivotal movement, and the manually actuable portion (44; 124) constitutes a manually-operable trigger.

3. A container according to claim 1 or claim 2, characterised in that the groove (42C; 120C) in the arm (42; 120) is tapered in cross-section.

4. A container according to any one of claims 1 to 3, characterised by means adjacent the slot (22; 112) to wipe a face of the disc as it enters and exits the cavity.

5. A container according to any one of claims 1 to 4, characterised in that each of said tracks (114A, 114B, 116A, 116B) has a section (116A, 116B) of arcuate shape having a curvature corresponding to the curvature of the disc, each said arcuate track section (116A, 116B) being resilient at a forward end portion closest to the slot (112) whereby ejection and insertion of the disc causes the forward end portions of the arcuate track sections to be resiliently deflected from a curved configuration conforming to the periphery of the disc to an outer configuration which permits passage of the disc, said deflectable forward end portions of the arcuate track sections returning to the disc-conforming configuration after passage of the disc.

6. A container according to claim 5, characterised in that during insertion of the disc the return movement of the deflectable forward end portions of the arcuate track sections (116A, 116B) to the disc conforming configuration acts to push the disc fully into the cavity (107) and to retain the disc within the cavity against accidental discharge.

## Patentansprüche

1. Tragbarer Scheibenbehälter, umfassend einen flachen, im allgemeinen rechtwinkligen Kasten, der einen Scheibenaufnahmehohlraum (20; 107) definiert, der angepaßt ist, entgegengesetzte Randteile der Scheibe gut sitzend aufzunehmen, wobei ein Schlitz (22; 112) in einem Rand des Kastens mit dem Hohlraum (20; 107) in Verbindung steht, und durch diesen die Scheibe auf seitliche Art und Weise in den Kasten eingeführt und aus diesem entfernt werden kann, und ein manuell betätigbares Scheibenauswurfmittel (40; 118), das angebracht ist, um mit einem Randteil der Scheibe in Eingriff zu treten und somit die Scheibe zumindest teilweise aus dem Hohlraum (20; 107) zu verschieben, wobei das Scheibenauswurfmittel (40; 118) einen Arm (42; 120) umfaßt, der sich in den hinteren Teil des Hohlraums (20; 107) erstreckt, um mit der Scheibe in Eingriff zu treten, und einen Teil (44; 124), der sich außerhalb des Kastens erstreckt und angepaßt ist, von einem Bediener manuell betätigt zu werden, dadurch gekennzeichnet, daß der Arm (42; 120) eine Krümmung aufweist, die der Krümmung der Scheibe entspricht, und eine Nut (42C; 120C), die sich entlang des Armes (42; 120) erstreckt und dem Schlitz (22; 112) zugewandt ist, wobei die Nut (42C; 120C) den Umfangsrandteil der Scheibe am hinteren Teil der Scheibe aufnimmt und trägt, um deren axiale Verschiebung zu verhindern, und daß gegenüberliegende Schienen (30; 114A, 114B, 116A, 116B) innerhalb des Kastens entlang gegenüberliegender Seiten des Hohlraums (20; 107) gebildet sind, um eine axiale Verschiebung der Scheibe innerhalb des Hohlraums zu verhindern, wobei die Nut (42C; 120C) und die Schienen (30; 114A, 1 14B, 116A, 116B) eine Berührung zwischen den Flächen der Scheibe und den gegenüberliegenden Wänden des Hohlraums (20; 107) verhindern.

2. Behälter nach Anspruch 1,
dadurch gekennzeichnet,
daß der Arm (42; 120) und der manuell betätigbare Teil (44; 124) des Auswurfmittels integral gebildet sind, wobei das Auswurfmittel für eine Schwenkbewegung angebracht ist, und daß der manuell betätigbare Teil (44; 124) eine manuell betreibbare Auslösung bildet.

3. Behälter nach Anspruch 1 oder Anspruch 2,
dadurch gekennzeichnet,
daß die Nut (42C; 120C) in dem Arm (42; 120) im Querschnitt verjüngt ist.

4. Behälter nach einem der Ansprüche 1 bis 3,
gekennzeichnet durch ein Mittel benachbart zu dem Schlitz (22; 112), um eine Fläche der Scheibe abzuwischen, während sie in den Hohlraum eintritt oder aus diesem austritt.

5. Behälter nach einem der Ansprüche 1 bis 4,
dadurch gekennzeichnet,
daß jede der Schienen (114A, 114B, 116A, 116B) einen Abschnitt (116A, 116B) mit gebogener Form umfaßt, der eine Krümmung aufweist, die der Krümmung der Scheibe entspricht, wobei jeder bogenförmige Schienenabschnitt (116A, 116B) an einem vorderen Endteil, der sich am dichtesten bei dem Schlitz (112) befindet, elastisch ist, wodurch das Auswerfen und Einführen der Scheibe veranlaßt, daß die vorderen Endteile der bogenförmigen Schienenabschnitte elastisch aus einer gekrümmten Gestalt, die sich an den Umfang der Scheibe anschmiegt, zu einer äußeren Gestalt gebogen werden, die einen Durchtritt der Scheibe zuläßt, wobei die biegbaren vorderen Endteile der bogenförmigen Schienenabschnitte nach dem Durchtritt der Scheibe in die sich an die Scheibe anschmiegende Gestalt zurückkehren.

6. Behälter nach Anspruch 5,
dadurch gekennzeichnet,
daß während des Einführens der Scheibe die Rückkehrbewegung der biegbaren vorderen Endteile der bogenförmigen Schienenabschnitte (116A, 116B) in die sich an die Scheibe anschmiegende Gestalt bewirkt, die Scheibe vollständig in den Hohlraum (107) zu schieben und die Scheibe innerhalb des Hohlraums gegen versehentlichen Ausstoß zu halten.

## Revendications

1. Boîtier portatif pour disque compact comprenant une boîte rectangulaire généralement plate formant une cavité de rangement de disque (20 ; 107) adaptée à recevoir par frottement doux les portions de bord opposées du disque, une fente (22 ; 112) dans un bord de la boîte communiquant avec la cavité (20 ; 107) et par laquelle le disque peut être inséré dans la boîte et enlevé de celle-ci de côté, et un moyen éjecteur de disque actionnable à la main (40 ; 118) monté de manière à engager une portion de bord du disque pour déplacer le disque au moins partiellement depuis la cavité (20 ; 107), le moyen éjecteur de disque (40 ; 118) comprenant un bras (42 ; 120) s'étendant dans l'arrière de la cavité (20 ; 107) pour engager le disque et une portion (44 ; 124) s'étendant à l'extérieur de la boîte et adaptée à être actionnée à la main par un utilisateur, caractérisé en ce que le bras (42 ; 120) est doté d'une courbure correspondant à la courbure du disque et d'une rainure (42C ; 120C) s'étendant le long du bras (42 ; 120) et donnant vers la fente (22 ; 112), la rainure (42C ; 120C) recevant et supportant la portion de bord périphérique du disque à l'arrière du disque pour empêcher son déplacement axial, et des glissières opposées (30 ; 114A, 114B, 116A, 116B) sont formées dans la boîte le long des côtés opposés de la cavité (20 ; 107) afin d'empêcher le déplacement axial du disque au sein de la cavité, ladite rainure (42C ; 120C) et lesdites glissières (30 ; 114A, 114B, 116A, 116B) empêchant un contact entre les faces du disque et les parois opposées de la cavité (20 ; 107).

2. Boîtier selon la revendication 1, caractérisé en ce que le bras (42 ; 120) et la portion actionnable à la main (44 ; 124) du moyen éjecteur sont formés d'un seul tenant, le moyen éjecteur est monté de manière à pivoter, et la portion actionnable à la main (44 ; 124) constitue un déclic actionnable à la main.

3. Boîtier selon la revendication 1 ou la revendication 2, caractérisé en ce que la rainure (42C ; 120C) dans le bras (42 ; 120) a une section transversale conique.

4. Boîtier selon l'une quelconque des revendications 1 à 3, caractérisé par un moyen adjacent à la fente (22 ; 112) pour nettoyer une face du disque lorsque le disque entre dans la cavité et en sort.

5. Boîtier selon l'une quelconque des revendications 1 à 4, caractérisé en ce que chacune desdites glissières (114A, 114B, 116A, 116B) comporte une section (116A, 116B) de forme arquée ayant une courbure correspondant à la courbure du disque, chaque section de glissière arquée (116A, 116B) étant élastique à une portion d'extrémité avant la plus proche de la fente (112) de manière que l'éjection et l'insertion du disque amènent les portions d'extrémité avant des sections de glissière arquées à être fléchies élastiquement d'une configuration incurvée épousant la périphérie du disque à une configuration externe qui permet le passage du disque, lesdites portions d'extrémité avant à fléchissement des sections de glissière arquées retournant dans leur configuration épousant le disque après le passage du disque.

6. Boîtier selon la revendication 5, caractérisé en ce que durant l'insertion du disque le mouvement de retour des portions d'extrémité avant à fléchissement des sections de glissière arquées (116A, 116B) dans leur configuration épousant le disque sert à pousser complètement le disque dans la cavité (107) et à retenir le disque dans la cavité pour l'empêcher d'en sortir accidentellement.
